# EUROPÄISCHE PATENTSCHRIFT

(11) **EP 1 439 472 B1**
(45) Veröffentlichungstag und Bekanntmachung des Hinweises auf die Patenterteilung: **15.03.2017**
(21) Anmeldenummer: 04000198.4
(22) Anmeldetag: 08.01.2004
(51) Int. Cl.: G01N 30/88, G05D 21/02, G01N 35/00, G01N 30/20, G01N 30/86

(54) **Prozessanalysensysteme mit automatischer Flüssigprobenvorbereitung und Anbindung zu Prozessleitsystemen**
Process analysis system with automatic liquid sample preparation and connection to process control system
Système d' analyse d' un processus avec préparation d' échantillon liquide et connection au système de contrôle du processus

(30) Priorität: 16.01.2003 DE 10301421
(43) Veröffentlichungstag der Anmeldung: 21.07.2004
(73) Patentinhaber: Bayer Aktiengesellschaft, 51373 Leverkusen (DE)
(72) Erfinder: Wimschneider, Andrea, Dr., 40597 Düsseldorf (DE); Gerlach, Martin, Dr., 41539 Dormagen (DE); Frisch, Burkhard, 51377 Leverkusen (DE); Lahme, Michael, 40599 Düsseldorf (DE); Schmitz, Bernd, 47829 Krefeld (DE); Sommer, Karsten, 47800 Krefeld (DE)
(74) Vertreter: BIP Patents

(56) Entgegenhaltungen:
- EP-A- 0 239 184
- EP-A- 0 255 026
- EP-A- 0 596 205
- WO-A-91/06050
- US-A- 4 835 711
- US-A- 5 668 735
- US-A- 6 007 235
- US-A- 6 020 960
- US-A1- 2003 013 199
- US-B1- 6 351 676
- US-B1- 6 650 957
- ANONYMOUS: "Measurement Methods", PULP EXPERT GUIDE BOOK, October 1996 (1996-10), pages 1-62, XP002374581,
- EINARSSON O.; HANSEN L.: "A PC-CONTROLLED MODULE SYSTEM FOR AUTOMATIC SAMPLE PREPARATION AND ANALYSIS", JOURNAL OF AUTOMATIC CHEMISTRY, vol. 17, no. 1, January 1995 (1995-01), pages 21-24, XP008029021, TAYLOR & FRANCIS LTD, GB

## Beschreibung

Die Erfindung betrifft modulare Analysensysteme für Prozesse, beispielsweise chemische, physikalische, biochemische, biotechnologische oder sonstige verfahrenstechnische Prozesse, sowie eine entsprechende Anbindung an Prozessleitsysteme zur Regelung dieser Prozesse und ein Computerprogrammprodukt.

Aus dem Stand der Technik ist es bekannt, dass zur Überwachung eines Prozesses beispielsweise zur Herstellung eines chemischen Produkts dem Prozess regelmäßig Proben entnommen werden, die dann analysiert werden. Hierzu ist es bislang in vielen Fällen erforderlich, dass ein Laborant oder Techniker manuell eine Probe entnimmt. Im Allgemeinen kann eine solche Probe nicht unmittelbar analysiert werden, sondern bedarf einer Probenvorbereitung, bevor die eigentliche Analyse z. B. durch einen Chromatographen, einen massenspektrometrischen Detektor oder einen anderen Analysator durchgeführt werden kann. Als Chromatographen kommen dabei z. B. Gaschromatographen oder High Performance Liquid Chromatographen (HPLC) zum Einsatz. Das Analyseergebnis wird dann von dem Laboranten an den Bediener eines Prozessleitsystems gemeldet, sodass dieser erforderlichenfalls entsprechende Anpassungen in das Prozessleitsystem eingeben kann.

Die erforderlichen manuellen Arbeitsschritte eines Laboranten zur Durchführung der Probenvorbereitung können recht umfangreich sein. Um hier Abhilfe zu schaffen, sind für die Probenvorbereitung für Chromatographie, z. B. die HPLC automatische Probenvorbereitungssysteme entwickelt worden. Aus Laborpraxis, Würzburg, 1990, 14, 11, 936, "Automatische Probenvorbereitung in der HPLC", Wolfgang Vogel, ist ein solches automatisches Probenvorbereitungssystem für die HPLC bekannt geworden. Das System führt vollautomatisch Verdünnungsreihen, Systemeignungstests, Mehrpunktkalibrierungen, Standardadditionen und Vorsäulenderivatisierungen durch, die üblicherweise manuell von einem Laboranten durchgeführt werden. Nach der Probenvorbereitung werden die Proben dann flüssigkeitschromatographisch untersucht.

Entsprechende Systeme zur automatischen Probenvorbereitung sind ferner aus Journal of Chromatography A, 730 (1996), 39-46, "Automation of sample preparation as a preliminary stage in the high-performance liquid chromatographic determination of polyphenolic compounds in sherry wines", D.A. Guillen et al., aus Journal of Automatic Chemistry, Bd. 17, Nr. 1 (Januar-Februar 1995), Seiten 21-24, "A PC-controlled module system for automatic sample preparation and analysis", Östen Einarsson, aus Pulp Expert Guid Book (Oktober 1996), Seiten 1-62 und aus US 2003/013199 bekannt geworden.

Ein gemeinsamer Nachteil solcher vorbekannter automatischen Probenvorbereitungssysteme ist, dass diese nur für die Probenvorbereitung für die Chromatographie geeignet sind. Solche automatischen Probenvorbereitungssysteme sind also nicht flexibel auch für andere Analyseverfahren einsetzbar, sondern sind nur dediziert für die Chromatographie verwendbar. Ein weiterer Nachteil ist, dass zu analysierende Proben manuell dem Prozess entnommen werden und der Probenvorbereitung zugeführt werden müssen. Ebenfalls ist nachteilig, dass das Analyseergebnis zunächst nur informativen Charakter hat und nicht unmittelbar in die Regelung des Prozesses eingeht.

Der Erfindung liegt daher die Aufgabe zugrunde ein verbessertes Prozessanalysensystem sowie ein verbessertes Verfahren und Computerprogrammprodukt zur Regelung eines Prozesses zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die Erfindung ermöglicht eine voll automatische Integration der Probenanalyse mit vorgeschalteter Flüssigprobenvorbereitung in ein Prozessleitsystem. Hierzu werden dem Prozess durch eine geeignete Vorrichtung automatisch Proben entnommen. Eine entnommene Probe wird durch eine automatische Probenvorbereitung verarbeitet und danach analysiert. Das Analysenergebnis wird dann beispielsweise über einen Feldbus an ein Prozessleitsystem übertragen. Dieses kann dann den Prozess entsprechend nachregeln. Die vorliegende Erfindung ermöglicht also eine online Durchführung von Probenvorbereitung und Analyse als integralen Bestandteil eines Prozessleitsystems.

Durch die automatische Probenvorbereitung werden die zur Vorbereitung der Probe für die Analyse erforderlichen Schritte durchgeführt. Je nach dem zur Anwendung kommenden Analyseverfahren, kann es sich zum Beispiel um die folgenden Schritte handeln:
Filtration der Probe, um eine Verstopfung von Leitungen, Ventilen und Säulen zu verhindern,
Verdünnung der Probe mit einem oder mehreren verschiedenen Lösungsmitteln, wobei die Verdünnung in einem oder mehreren Schritten erfolgen kann; dadurch wird die Konzentration einer Probe in den Messbereich des verwendeten Analysators gebracht; insbesondere sind Verdünnungsreihen mit verschiedenen Konzentrationen möglich, um zum Beispiel Mehrpunktkalibrationen durchzuführen,
Zugabe von internem Standard; damit wird die Auswertung der Ergebnisse erleichtert und in vielen Fällen ein genaueres Ergebnis erzielt;
Kühlung oder Temperierung der Probe um eine geeignete Temperatur für die Analyse zu erzielen, dies ist insbesondere bei temperaturempfindlichen Stoffen erforderlich sowie bei Stoffen, die wegen ihrer Viskosität Probleme bereiten und erst durch z. B. Erwärmung gut vermessbar sind; Ausstrippen der Probe mit einem Gas, um störende leichtflüchtige Komponenten zu vertreiben; Ausstrippen der Probe mit einem Gas und Vermessen der Gasphase; damit können leichtflüchtige Verbindungen, z. B. aus Abwasser bestimmt werden;
Extraktion von Inhaltsstoffen durch Zugabe von geeigneten Lösungsmitteln;
Umfällung von Probeninhaltsstoffen, z. B. zur Aufreinigung oder Abtrennung von anderen Begleitstoffen;
Derivatisierung, z. B. Silylierung der Probe, um die Probe in eine chemische Form zu überfahren, die sich für die Analyse der Probe eignet, z. B. besteht bei reaktiven Verbindungen ohne Derivatisierung die Gefahr der Zersetzung der Probe auf der chromatographischen Säule.

Zur Entnahme einer Probe aus dem Prozess wird ein steuerbares Bypassmodul verwendet. Das Bypassmodul ist mit einem automatischen Probenvorbereitungssystem verbunden. Dies ermöglicht es unmittelbar aus dem Prozess durch das Bypassmodul eine Probe zu gewinnen und diese automatisch der Probenvorbereitung zuzuführen.

Nach der automatischen Probenvorbereitung wird die vorbereitete Probe dann einem Analysator zugeführt. Das Analyseergebnis wird dann z. B. über einen Feldbus an das Prozessleitsystem übertragen.

Die automatische Probenvorbereitung ist modular aufgebaut. Bei den Modulen handelt es sich z. B. um Probenventile, Büretten, Dosierventile und dergleichen, die durch Leitungen miteinander verbunden sind. Durch entsprechende Ansteuerung der einzelnen Module von einer Steuereinheit wird so die automatische Probenvorbereitung durchgeführt.

Vorzugsweise sind auch die Entnahmeeinheit zur Entnahme der Probe aus dem Prozess sowie der Analysator modular aufgebaut und über solche Leitungen mit den Modulen für die Probenvorbereitung verbunden. Dadurch wird ein modular aufgebautes und integriertes System zur Entnahme der Proben, zur Probenvorbereitung und zur Probenanalyse geschaffen. Dieser modulare Aufbau hat insbesondere den Vorteil, dass die automatische Probenvorbereitung für unterschiedliche Analysatoren ohne großen Aufwand anpassbar ist.

Dieser modulare Aufbau spiegelt sich auch in dem Steuerungsprogramm des Systems wider. In der Steuereinheit des Systems ist für jedes Modul eine Treibersoftware hinterlegt. Auf diese Treibersoftware greift das Steuerungsprogramm zu, um nach einem vom Nutzer vorgebbaren Arbeitsablauf die Schritte der Probenentnahme, der automatischen Probenvorbereitung und Analyse vorzunehmen.

Der Ablauf des Steuerungsprogramm wird durch vom Nutzer definierbare Parameter festgelegt. Beispielsweise kann der Nutzer über eine grafische Nutzerschnittstelle eines üblichen Personalcomputers (PC) zur Verfügung stehende Module und von diesen auszuführende Aktionen auswählen. Dadurch können in tabellarischer Form Ablaufsequenzen für die Probenentnahme, Probenvorbereitung und Probenanalyse mit Hilfe der Module definiert werden.

Die diesen Ablauf beschreibenden Parameter werden dann von dem PC exportiert und an die Steuereinheit des Regelungssystems übertragen. Dort legen diese Parameter den Programmablauf des Steuerungsprogramms fest. Die Parameter bestimmen also die Reihenfolge in der das Steuerungsprogramm einzelne Treiberprogramme aufruft sowie auch die Steuerungsparameter, die das Steuerungsprogramm an die Treibersoftware übergibt, um ein bestimmtes Modul zu einer bestimmten Aktion zu veranlassen.

Von besonderem Vorteil ist hierbei, dass zur Festlegung eines Programmablaufs des Steuerungsprogramms kein Computerexperte erforderlich ist, da der Programmablauf in intuitiver Art und Weise über die grafische Benutzerschnittstelle durch Auswahl von Modulen und den durchzuführenden Aktionen erfolgen kann. Insbesondere kann so ein Laborant oder Techniker die zuvor von ihm manuell durchgeführten Schritte über die grafische Benutzerschnittstelle beschreiben. Diese Beschreibung dient dann als Parametriesierung für das Steuerungsprogramm, sodass dieses die jeweils erforderliche Treibersoftware in der benötigen Reihenfolge anspricht.

Nach einer bevorzugten Ausführungsform der Erfindung dient als Steuereinheit eine Automatisierungskomponente, wie beispielsweise eine Simatik S7 der Firma Siemens AG. Eine solche Automatisierungskomponente ist für den störungsfreien Dauereinsatz in einer industriellen Umgebung ausgelegt und kann daher nicht wie ein üblicher PC "abstürzen". Von besonderem Vorteil ist hierbei, dass der PC, mit Hilfe dessen der Benutzer den Ablauf eingibt, und die Steuereinheit beim Betrieb des Systems voneinander getrennt werden können, d. h. nachdem die Parameter, die den Programmablauf festlegen, von dem PC an die Steuereinheit übertragen worden sind, kann der PC von der Steuereinheit getrennt werden. Dadurch ist ein Betrieb der Steuereinheit unabhängig vom PC möglich.

Das erfindungsgemäße Analysensystem ist insbesondere deshalb besonders vorteilhaft, da es aufgrund seines modularen Aufbaus und seiner damit erzielbaren Flexibilität für unterschiedlichste Prozesse einsetzbar ist, insbesondere für chemische, physikalische, biochemische, biotechnologische oder sonstige verfahrenstechnische Prozesse.

Im Weiteren werden bevorzugte Ausführungsformen der Erfindung mit Bezugnahme auf die Zeichnungen näher erläutert. Es zeigen:
- Figur 1: ein Blockdiagramm einer bevorzugten Ausführungsform eines erfindungsgemäßen Regelungssystems,
- Figur 2: ein Flussdiagramm zur Darstellung einer bevorzugten Ausführungsform eines Verfahrens zur Regelung mit Hilfe des Systems der Figur 1,
- Figur 3: eine bevorzugte Ausführungsform für eine modular aufgebaute automatische Probenvorbereitung mit Bypassmodul und Probenanalysemodul,
- Figur 4: eine perspektivische Darstellung von Beispielkombinationen der Module,
- Figur 5: eine grafische Benutzerschnittstelle auf einem PC zur Festlegung des Programmablaufs,
- Figur 6: ein Blockdiagramm einer bevorzugten Ausführungsform des Regelungssystems mit einer Automatisierungskomponente.

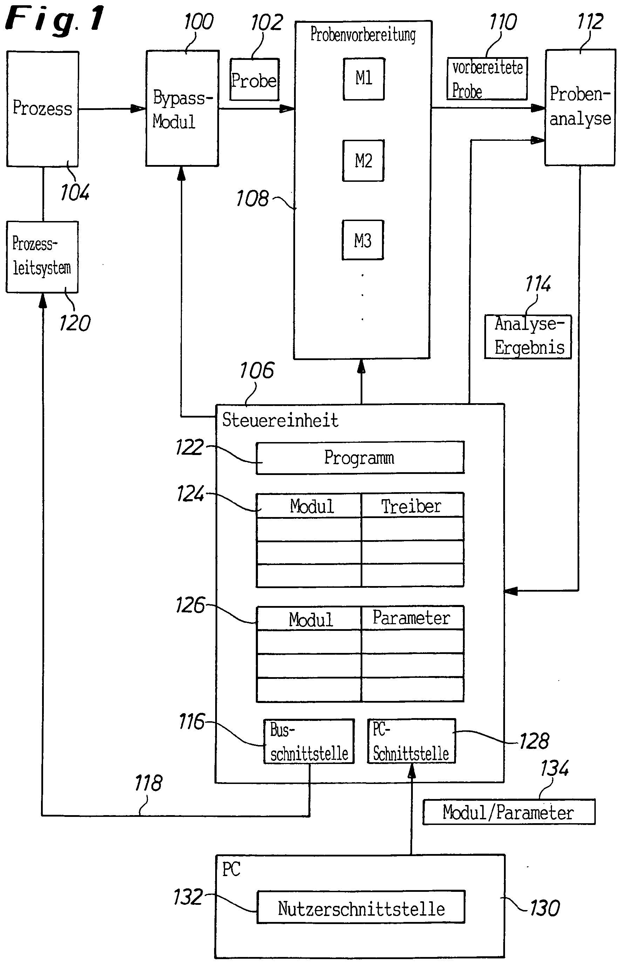

Die Figur 1 zeigt ein Blockdiagramm einer Ausführungsform eines erfindungsgemäßen Regelungssystems. Zu dem Regelungssystem gehört ein Bypassmodul 100 zur Entnahme einer Probe 102 aus einem Prozess 104. Das Bypassmodul 100 ist mit einer Steuereinheit 106 verbunden, die das Bypassmodul 100 zur Entnahme der Probe 102 aus dem Prozess 104 ansteuern kann.

Das Bypassmodul 100 ist mit einer Probenvorbereitung 108 verbunden, sodass die Probe 102 von dem Bypassmodul 100 in die Probenvorbereitung 108 gelangt. Die Probenvorbereitung 108 beinhaltet verschiedene Module M1, M2, M3, ..., wobei durch jedes der Module eine bestimmte Funktionalität realisiert wird.

Hierbei kann es sich beispielsweise um Probenventile, Büretten, Dosierventile und dergleichen handeln. Diese sind untereinander mit einem Leitungsnetz verbunden. Durch Ansteuerung der Probenvorbereitung 108, d.h. einzelner Module der Probenvorbereitung, durch die Steuereinheit 106 wird so die Probe 102 einer automatischen Probenvorbereitung unterzogen. Die resultierende vorbereitete Probe 110 gelangt dann von der Probenvorbereitung 108 in den Analysator 112. Bei dem Analysator 112 handelt es sich z. B. um einen Gas- oder Flüssigkeitschromatographen, um einen massenspektrometrischen Detektor oder um eine Analysator zur Durchführung von Ramanspektroskopie oder Nahinfrarotspektroskopie. Der Analysator 112 gibt ein Analyseergebnis 114 aus, welches beispielsweise in Form einer Datei zu der Steuereinheit 106 übertragen wird.

Statt eines Analysators 112 können auch mehrere solcher Analysatoren in einer Parallelschaltung mit der Probenvorbereitung 108 verbunden sein.

Die Steuereinheit 106 hat eine Busschnittstelle 116, über die die Steuereinheit 106 mit einem Feldbus 118 verbunden ist. Hierbei kann es sich z. B. um einen Profibus oder um Industrial Ethernet handeln. Daneben ist auch eine Ankopplung über konventionelle Verdrahtung (Einzelsignale) oder über serielle Schnittstellen möglich.

Über die Busschnittstelle 116 gibt die Steuereinheit 106 das Analyseergebnis 114 oder Teile hiervon auf den Feldbus 118 in Form eines Datentelegramms aus, welches als Zieladresse eine Automatisierungskomponente des Prozessleitsystems 120 hat. Die betreffende Automatisierungskomponente des Prozessleitsystems 120 verarbeitet das Analyseergebnis als Regelgröße z. B. durch Vergleich mit einer Sollgröße, um erforderlichenfalls den Prozess 104 entsprechend nachzuregeln.

Alternativ kann die Nachregelung auch so erfolgen, dass das Analyseergebnis über den Feldbus 118 zu einer Bedienkonsole übertragen wird, und dort angezeigt wird. Die Anzeige des Analyseergebnisses kann mit einem akustischen oder optischen Warnsignal verbunden sein, wenn das Analyseergebnis außerhalb eines Sollbereichs liegt. Erforderlichen falls kann dann eine Nachregelung des Prozesses zum Beispiel durch eine manuelle Eingabe zur Veränderung eines Prozessparameters durch den Benutzer erfolgen.

Alternativ kann die Regelung auch unter Verwendung einer modellbasierten automatisierten Prozessführung erfolgen, das heißt zum Beispiel durch Einsatz einer Regelung im Zustandsraum, eines neuronalen Netzes oder eines hybriden neuronalen Netzes mit rigorosen Modellanteilen.

Die Steuereinheit 106 beinhaltet ein Programm 122, welches zur Steuerung des Programmablaufs der Probenentnahme durch Ansteuerung des Bypassmoduls 100, der Probenvorbereitung durch Ansteuerung der Probenvorbereitung 108 und der Probenanalyse durch Ansteuerung von Analysator 112 dient. Zur Ansteuerung des Bypassmoduls 100, der Module M1, M2, M3, ..., der Probenvorbereitung 108 und des Analysators 112 greift das Programm 122 auf entsprechende Treiberprogramme 124 zu, die jeweils einem der Module zugeordnet sind. Der Programmablauf des Programms 122 wird durch Parameter 126 festgelegt, die die zeitliche Reihenfolge der Ansteuerung von Modulen und die Steuerungsparameter zur Übergabe an das jeweilige Treiberprogramm festlegen.

Zur Eingabe der Parameter 126 in die Steuereinheit 106 weist diese eine PC-Schnittstelle 128 auf. Mittels der PC-Schnittstelle 128 kann die Steuereinheit 106 mit einem PC 130 verbunden werden. Der PC 130 hat eine Nutzerschnittstelle 132, die vorzugsweise als grafische Nutzerschnittstelle ausgebildet ist.

Über die Nutzerschnittstelle 132 gibt ein Nutzer die Parameter 126 ein. Nachdem diese Eingabe erfolgt ist, wird eine entsprechende Datei 134 exportiert und von dem PC 130 an die Steuereinheit 106 übertragen. Auf diese Art und Weise erhält die Steuereinheit 106 die Parameter 126, die den Ablauf des Programms 122 festlegen. Nachdem die Datei 134 von dem PC 130 an die Steuereinheit 106 übertragen worden ist, kann die Verbindung zwischen dem PC 130 und der Steuereinheit 106 getrennt werden. Dies hat den Vorteil, dass die störungsfreie Funktion der Steuereinheit 106 im Weiteren nicht von dem PC 130 abhängt.

Über die Nutzerschnittstelle 132 kann der Benutzer auch eine Auswahl des Analysators 112 treffen, wenn mehrere parallel geschaltete Analysatoren vorhanden sind. Durch die Auswahl des Analysators 112 wird zugleich der Ablauf des Programms 122 für die für den ausgewählten Analysator 112 erforderliche Durchführung der Probenvorbereitung festgelegt.

Ferner ist es auch möglich, dass dieselbe Probenvorbereitung für verschiedene Analysatoren 112 verwendet werden kann. In diesem Fall wird eine entsprechende Menge der Probe vorbereitet und dann auf diese Analysatoren aufgeteilt. Diese Aufteilung der vorbereiteten Probe erfolgt ebenfalls durch Steuerung des Programms 122.

Eine weitere Variante ist, dass eine für einen bestimmten Analysatortyp vorbereitete Probe noch weiterer Vorbereitungsschritte bedarf, um für einen anderen Analysatortyp verwendet zu werden. In diesem Fall kann die für den ersten Analysatortyp vorbereitete Probe in einer gewissen Menge entnommen werden, um mit der verbleibenden Probenmenge weitere Probenvorbereitungsschritte durchzuführen.

Über das Programm 122 kann also eine Probe für mehrere in den parallel geschalteten Analysatoren im wesentlichen gleichzeitig durchzuführende Analysen vorbereitet werden. Ebenso ist es möglich, die Probenvorbereitung in mehreren Stufen durchzuführen, wobei die Zwischenprodukte entsprechenden Typen von Analysatoren der Reihe nach zugeführt werden.

Das Regelungssystem der Figur 1 ermöglicht es also die im Stand der Technik erforderliche manuelle Entnahme einer Probe aus dem Prozess, die Probenvorbereitung und Analyse zu automatisieren und ferner das Analyseergebnis als Regelgröße in ein Prozessleitsystem einzuspeisen. Dadurch können einerseits in erheblichem Umfang personelle Ressourcen eingespart werden. Zum anderen ist das Regelungssystem durch seinen modularen Aufbau sowohl auf Hardware- als auch auf Softwareebene mit geringstem Aufwand an unterschiedliche Analyseaufgaben anpassbar.

Über die grafische Nutzerschnittstelle kann der Ablauf ferner in intuitiver Art und Weise z. B. von einem Laboranten oder Techniker definiert werden, der so sein Expertenwissen in die Automatisierung des Ablaufs einbringen kann. Ferner wird durch das Regelungssystem auch eine verbesserte Prozessregelung ermöglicht, da einerseits die Probenentnahme in genau vordefinierten zeitlichen Abständen oder zu programmierbaren Zeitpunkten erfolgt, die Probenvorbereitung und Analyse voll automatisch mit gleich bleibender Qualität in reproduzierbarer Art und Weise durchgeführt wird und das Analyseergebnis ohne zeitliche Verzögerung als Regelgröße in die Nachregelung des Prozesses eingespeist werden kann.

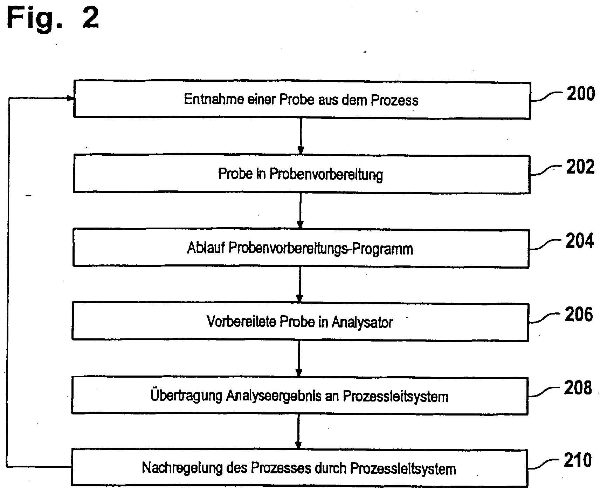

Die Figur 2 veranschaulicht diesen Ablauf nochmals. In dem Schritt 200 wird eine Probe aus dem Prozess entnommen. Dies erfolgt durch Ansteuerung einer Probeentnahmeeinheit, beispielsweise eines Bypassmoduls, durch die Steuereinheit des Regelungssystems. Die entnommene Probe wird dann z. B. über eine Flüssigkeitsleitung in dem Schritt 202 einer automatischen Probenvorbereitung zugeführt. In dem Schritt 204 erfolgt die automatische Probenvorbereitung nach einem vorgegebenen Programmablauf. Die vorbereitete Probe wird in dem Schritt 206 in einem Analysator eingegeben und dort analysiert.

Wenn mehrere Analysatoren vorhanden sind, wird die vorbereitete Probe aufgeteilt und in zwei oder mehrere der Analysatoren für eine zeitlich parallel verlaufende Analyse eingegeben. Das bzw. die resultierenden Analyseergebnisse werden dann parallel oder sequentiell an ein Prozessleitsystem übertragen. Dies erfolgt in dem Schritt 208. Das Prozessleitsystem kann in dem Schritt 210 basierend auf dem Analyseergebnis erforderlichenfalls eine Nachregelung des Prozesses durchführen.

Die Schritte 200 bis 210 werden vorzugsweise zyklisch innerhalb vorgegebener zeitlicher Abstände durchlaufen oder nachdem die Erfüllung einer bestimmten Bedingung durch das Prozessleitsystem festgestellt worden ist und das Prozessleitsystem über den Feldbus an die Steuereinheit ein entsprechendes Anforderungssignal zur Gewinnung eines Analyseergebnisses gesendet hat.

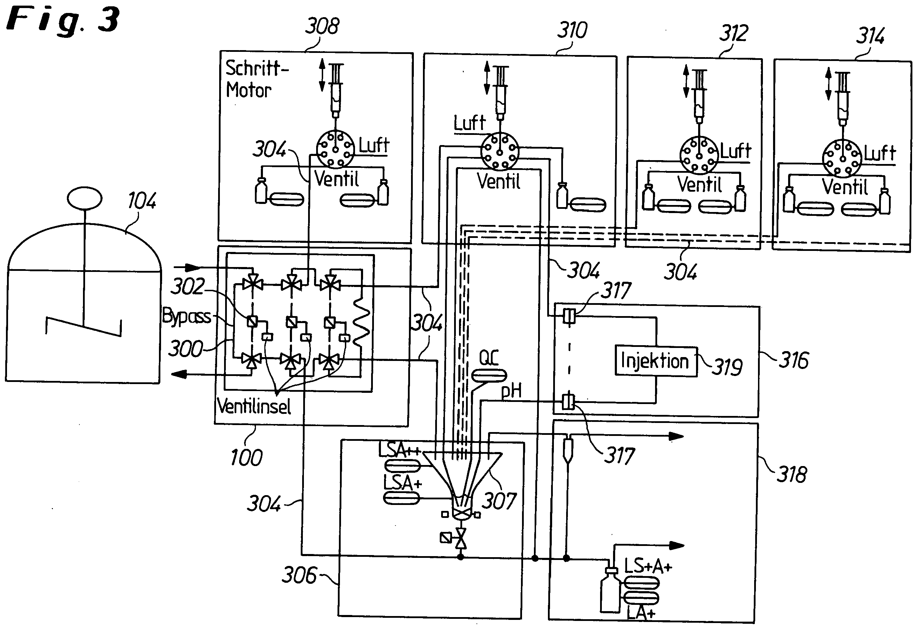

Die Figur 3 zeigt eine Ausführungsform für die Probenentnahme, die automatische Probenvorbereitung und Probenanalyse eines erfindungsgemäßen Regelungssystems. Elemente der Figur 3, die Elementen der Figur 1 entsprechen, werden dabei mit demselben Bezugszeichen gekennzeichnet.

Das Bypassmodul 100 hat einen Bypass 300, der über verschiedene Ventile 302, die von der Steuereinheit ansteuerbar sind, die Entnahme einer Probe aus dem Prozess 104 ermöglicht. Das Bypassmodul 100 ist über Leitungen 304 mit verschiedenen Modulen der Probenvorbereitung verbunden. Hierzu gehören das Probenvorbereitungsmodul 306, das Kalibrierungsmodul 308, das Spritzen-Modul 310, sowie weitere Module 312 und 314, das Injektionsmodul 316 und das Abfallmodul 318. Die genannten Module sind untereinander durch Leitungen 304 verbunden oder über geeignete Ventilstellungen miteinander verbindbar. Die verschiedenen Module und Ventile sind von der Steuereinheit des Regelungssystems ansteuerbar.

Beispielsweise gelangt die von dem Bypassmodul 100 dem Prozess 104 entnommene Probe unmittelbar oder über eines der anderen Module in das Probenvorbereitungsmodul 306, wo nach einem vorgegebenen Ablauf der Probe weitere Stoffe, z. B. zur Verdünnung der Probe zugeführt werden. Hierzu ist in dem Probenvorbereitungsmodul 306 ein Rührgefäß 307 vorgesehen. Ferner können in dem Probenvorbereitungsmodul 306 Elemente zur Temperierung der Probe auf eine geeignete Temperatur vorgesehen sein. Nach Abschluss der Probenvorbereitung wird die vorbereitete Probe dem Probenvorbereitungsmodul 306 entnommen und über das Injektionsmodul 316 in den Analysator injiziert.

Das Injektionsmodul 316 hat einen Injektor 319 von dem aus die vorbereitete Probe unmittelbar in den Analysator injiziert wird. Eine vorbereitete Probe erreicht den Injektor 319 zum Beispiel von dem Sprizen-Modul 310 oder von dem Probenvorbereitungsmodul 306. In den entsprechenden Zuleitungen zu dem Injektor 319 sind Filtrationseinheiten 317 angeordnet.

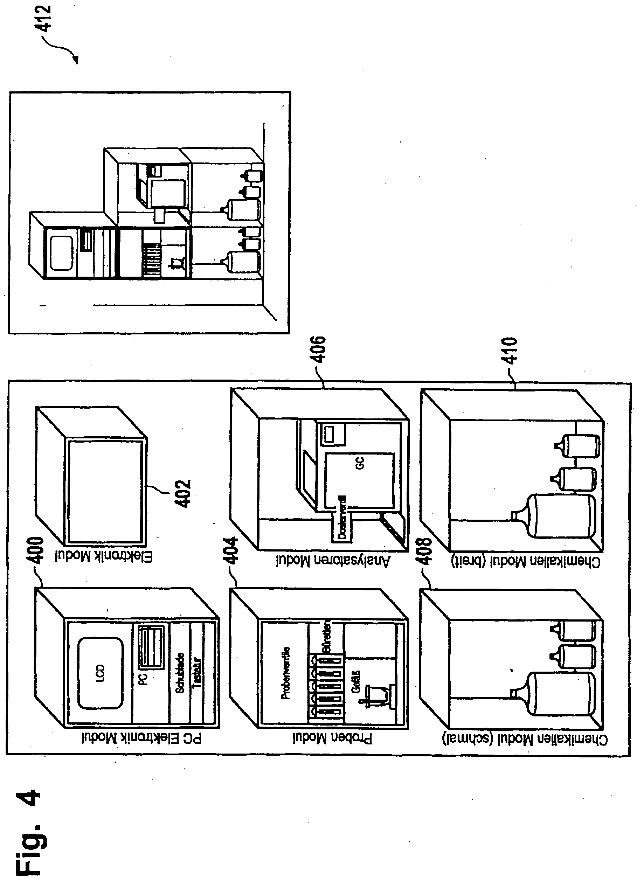

Die Figur 4 zeigt ein Beispiel in perspektivischer Ansicht für die verschiedenen Module und deren Kombination. Beispielsweise stehen für den Aufbau des Regelungssystems die folgenden vorgegebenen Module zur Verfügung: PC-Elektronikmodul 400 mit einer LCD-Anzeige, einem PC-Einschub und einer Tastatur, Elektronikmodul 402 zur Aufnahme der Steuereinheit, Probenmodul 404 zur Realisierung unterschiedlicher Funktionalitäten, Analysatorenmodul 406 mit einem Analysator, wie z. B. einem Gaschromatographen, in den über ein Dosierventil eine vorbereitete Probe eingebracht werden kann sowie Chemikalienmodule 408 und 410 in unterschiedlicher Größe. Die Chemikalienmodule 408 und 410 können zur Aufnahme von verschiedenen Lösungsmitteln, internem Standard, Kalibrationslösungen, Extraktionsmitteln oder Derivatisierungs-Reagenzien dienen.

Diese Module können z. B. zu der Kombination 412 miteinander verknüpft werden. Je nach der für die Analyse erforderliche Probenvorbereitung lässt sich so flexibel ein Probenvorbereitungssystem zusammenstellen.

Vorteilhaft ist ferner, dass die Module einzeln geplant und gefertigt werden können. Ferner können mehrere Probenmodule an einen Analysator angeschlossen werden, ebenso wie auch verschiedene Analysatoren an ein Probenmodul angeschlossen werden können.

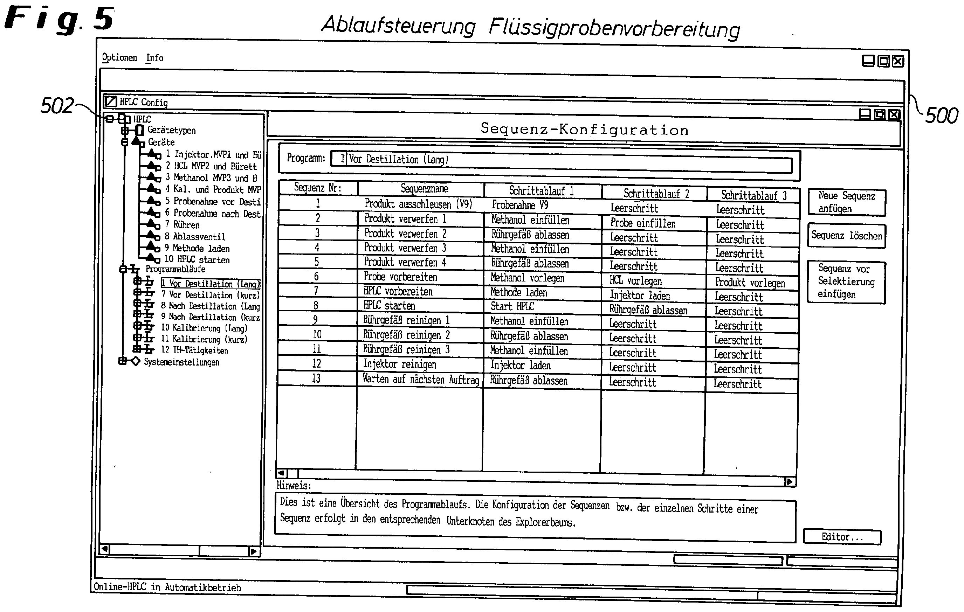

Die Figur 5 zeigt ein Fenster 500 einer grafischen Benutzerschnittstelle (vergleiche Nutzerschnittstelle 132 der Figur 1). Das Fenster 500 beinhaltet die Darstellung eines Explorerbaums 502, in dem die zur Verfügung stehenden Module, d. h. die "Geräte" der automatischen Probenvorbereitung aufgelistet sind. Ferner zeigt der Explorerbaum 502 die mit Hilfe dieser Geräte durchführbaren Programmabläufe.

Ein Programmablauf wird von einem Nutzer in tabellarischer Form eingegeben. Hierzu wird der Programmablauf in Sequenzen unterteilt, denen jeweils eine Sequenznummer zugeordnet ist. Ferner erhält jede Sequenz einen Sequenznamen. Eine Sequenz besteht aus z. B. drei Schritten. In jedem Schritt wird von einem der Geräte eine nutzerdefinierte Aktion durchgeführt. Durch die Auswahl von Geräten und die Eingabe entsprechender Parameter kann der Nutzer so in intuitiver Art und Weise den Programmablauf für die Probenvorbereitung festlegen.

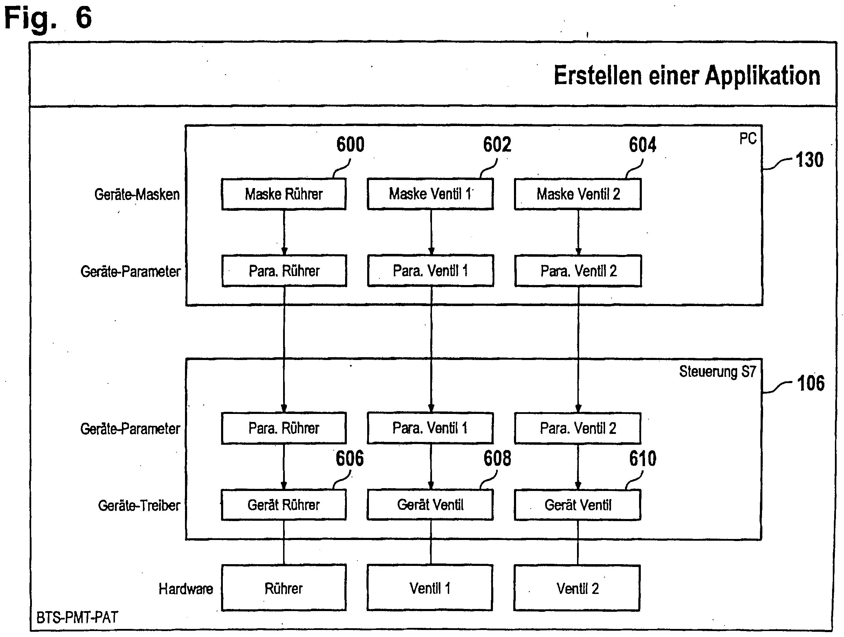

Gemäß der Ausführungsform der Figur 6 erfolgt dies so, dass für jedes vom Benutzer ausgewählte Gerät wie z. B. "Rührer", "Ventil 1" und "Ventil 2" eine separate Maske 600, 602 bzw. 604 aufgerufen wird. Über eine solche Maske gibt der Nutzer die konkreten Geräteparameter ein.

Die Geräteparameter werden dann von dem PC 130 an die Steuereinheit 106 übertragen, wobei es sich beispielsweise um eine S7-Steuerung der Firma Siemens handelt. Beim Programmablauf in der Steuereinheit 106 werden diese Parameter dann an die entsprechenden Gerätetreiber 606, 608, 610 übergeben. Hierdurch werden die entsprechenden Hardwarekomponenten angesteuert.

Vorzugsweise erfolgt die Softwareentwicklung auf der Basis von Funktionstypen. Funktionstypen bilden die Grundlage für die Erstellung von Abläufen, d. h. sie beinhalten Informationen und Parameter zu einer bestimmten Funktionalität. Die Funktionstypen dienen als Bibliothek und werden für die Steuereinheit programmiert. Die Funktionsparameter werden dann im PC abgebildet.

Aus der Bibliothek der Funktionstypen wird ein Typ gewählt und speziell parametriert. So entsteht die Beschreibung eines Geräts, das einen eigenen Namen erhält und in die Abläufe eingebunden werden kann. Der betreffende Gerätename erscheint in dem Explorerbaum der Nutzerschnittstelle (vergleiche Explorerbaum 502 der Figur 5).

Auf der Grundlage der so definierten Geräte können durch Auswahl der Geräte in einer bestimmten Reihenfolge Abläufe festgelegt werden. Ein Ablauf besteht aus einer Anzahl n von Sequenzen, die nacheinander abgearbeitet werden. Vorzugsweise können in einer Sequenz bis zu drei Aktionen definiert werden, die parallel ablaufen. Eine Aktion besteht dabei aus einem definierten Gerät, das in einer Sequenz innerhalb eines Ablaufs gestartet wird. Durch die vom Anwender so festgelegte Reihenfolge der Abläufe wird ein Zyklus definiert.

Auf der Basis von Funktionstypen, d. h. einer abstrakten Beschreibung von Geräteklassen, lassen sich so in effizienter Art und Weise Gerätebeschreibungen für die konkreten Geräte einer Probenvorbereitung erstellen.

### Bezugszeichenliste

Bypassmodul 100
Probe 102
Prozess 104
Steuereinheit 106
Probenvorbereitung 108
vorbereitete Probe 110
Analysator 112
Analyseergebnis 114
Busschnittstelle 116
Feldbus 118
Prozessleitsystem 120
Programm 122
Treiberprogramme 124
Parameter 126
PC-Schnittstelle 128
PC 130
Nutzerschnittstelle 132
Datei 134
Bypass 300
Ventil 302
Leitungen 304
Probenvorbereitungsmodul 306
Rührgefäß 307
Kalibrierungs-Modul 308
Spritzen-Modul 310
Modul 312
Modul 314
Injektionsmodul 316
Filtrationseinheit 317
Abfallmodul 318
Injektor319
PC-Elektronikmodul 400
Elektronikmodul 402
Probenmodul 404
Analysatorenmodul 406
Chemikalienmodul 408
Chemikalienmodul 410
Kombination 412
Fenster 500
Explorerbaum 502
Maske 600
Maske 602
Maske 604
Gerätetreiber 606
Gerätetreiber 608
Gerätetreiber 610

## Patentansprüche

1. Analysensystem für einen Prozess mit:
- Ansteuerbarer Bypassmodul (100) zur Entnahme einer flüssigen Probe aus dem Prozess verbunden mit
- Ansteuerbarer Mitteln (108; 302, 304, 306, 307, 308, 310, 312, 314, 316, 317, 318) zur Flüssigprobenvorbereitung, verbunden mit
- Ansteuerbarer Mitteln (112) zur Analyse der Probe, verbunden mit
- Mitteln (116) zur Übertragung eines Analysenergebnisses (114) zu einem Prozessleitsystem (118, 120)
- eine Steuereinheit (106), und
wobei
- Die ansteuerbarer Mitteln zur Flüssigprobenvorbereitung in verschiedenen Modulen (M1, M2, M3,...) organisiert sind, wobei durch jedes der Module eine bestimmte Funktionalität realisiert wird, und wobei einzelne Module der Flüssigprobenvorbereitung durch die Steuereinheit (106) ansteuerbar sind,
- ein Modul zur Flüssigprobenvorbereitung (306) ein Rührgefäß (307) aufweist,
- der Bypassmodul 100 mit der Steuereinheit (106) verbunden ist,
**dadurch gekennzeichnet, dass**
- die Steuereinheit (106) ein Steuerungsprogramm (122) und Treiberprogramme (124) für die Ansteuerung der Module der Mittel zur Flüssigprobenvorbereitung aufweist, wobei das Steuerungsprogramm (122) zur Steuerung des Ablaufs der Probenentnahme, der Flüssigprobenvorbereitung und der Probenanalyse auf die Treiberprogramme (124) zugreift,
die jeweils einem der Module zugeordnet sind, und
- eine Nutzer-Schnittstelle (132) zur Eingabe einer Analyse-Sequenz auf einem Computer (130), wobei die Nutzer-Schnittstelle (132) so ausgebildet ist, dass ein Programmablauf des Steuerungsprogramms durch Auswahl von Repräsentationen der Module und Eingabe von den durch die ausgewählten Module auszuführenden Aktionen auf dem Computer (130) bestimmt ist, und der Computer Mittel zum Export von die Analyse-Sequenz beschreibenden Daten (134) für das Steuerungsprogramm aufweist,
- wobei die die Analyse-Sequenz beschreibenden Daten (134) als Parametrisierung für das Steuerungsprögramm dienen, sodass dieses die jeweils erforderliche Treiberprogramme in der benötigen Reihenfolge anspricht.

2. Analysensystem nach Anspruch 1, wobei die Mittel zur Analyse der Probe einen Chromatographen, eine Kombination aus Chromatograph und massenspektrometrischen Detektor (GC-MS oder HPLC-MS) oder einen anderen Analysator aufweisen.

3. Verfahren zur Regelung eines Prozesses in einem Analysesystem, das zur automatischen Flüssigprobenvorbereitung ansteuerbare Mitteln zur Flüssigprobenvorbereitung organisiert in verschiedenen Modulen (M1, M2, M3,...) aufweist, wobei jedes der Module eine bestimmte Funktionalität realisiert, wobei ein Modul zur Flüssigprobenvorbereitung (306) ein Rührgefäß (307) umfasst und, wobei einzelne Module der Flüssigprobenvorbereitung durch eine Steuereinheit (106) mit einem Steuerungsprogramm angesteuert werden, indem das Steuerungsprogramm auf Treiberprogramme (124), die jeweils einem der Module zugeordnet sind, zugreift und dieser Zugriff entsprechend einer von einem Nutzer vorgegebenen Parametrisierung erfolgt,
mit folgenden Schritten:
- Eingabe einer Analyse-Sequenz auf einem Computer (130) durch ein Nutzer über eine Nutzerschnittstelle, wobei die Nutzer-Schnittstelle (132) so ausgebildet ist, dass ein Programmablauf des Steuerungsprogramms durch Auswahl von Repräsentationen der Module der Mittel zur Flüssigprobenvorbereitung und Eingabe von den durch die ausgewählten Module auszuführenden Aktionen auf dem Computer (130) bestimmt ist,
- Export von die Analyse-Sequenz beschreibenden Daten (134) in das Steuerungsprogramm, wobei die die Analyse-Sequenz beschreibenden Daten (134) als Parametrisierung für das Steuerungsprogramm dienen, sodass dieses die jeweils erforderliche Treiberprogramme in der benötigen Reihenfolge anspricht,
- Entnahme einer Probe aus dem Prozess durch Ansteuerung-eines Bypassmoduls (100) zur Entnahme einer flüssigen Probe aus dem Prozess, das mit einer Vorrichtung zur automatischen Flüssigprobenvorbereitung gekoppelt ist,
- Zuführung der Probe von der Probenentnahmeeinheit zu der Vorrichtung zur automatischen Flüssigprobenvorbereitung, in das Rührgefäß (307) des Probenvorbereitungsmodul (306) - Ansteuerung der Vorrichtung zur automatischen Flüssigprobenvorbereitung mit dem Steuerungsprogramm,
- Automatische Durchführung der Flüssigprobenvorbereitung,
- Zuführung der vorbereiteten Probe zu einer Analyseeinheit,
- Ansteuern der Analyseeinheit zur Analyse der vorbereiteten Probe,
- Ausgabe eines Analysenergebnisses auf ein Bussystem eines Prozessleitsystems zur Nachregelung des Prozesses auf der Basis des Analyseergebnisses durch das Prozessleitsystem.

4. Verfahren nach Anspruch 3, wobei von einem Nutzer über eine Benutzerschnittstelle des Computers in tabellarischer Form Module und von den Modulen durchzuführende Aktionen ausgewählt werden und die Auswahl des Benutzers in Form von Parametern zur Übertragung an die Steuerungseinheit exportiert wird.

5. Computerprogrammprodukt, insbesondere digitales Speichermedium, zur Durchführung des Verfahrens nach einem der Ansprüchen 3 oder 4 in einem Analysesystem nach einem der Ansprüche 1 oder 2.

## Claims

1. Analysis system for a process, having:
- operable bypass module (100) for taking a liquid sample from the process, connected to
- operable liquid sample preparation means (108; 302, 304, 306, 307, 308, 310, 312, 314, 316, 317, 318), connected to
- operable means (112) for analysing the sample, connected to
- means (116) for transmitting an analysis result (114) to a process control system (118, 120),
- a control unit (106), and
- the operable liquid sample preparation means being organised in different modules (M1, M2, M3,...), a particular functionality being realized by way of each of the modules, and individual modules of the liquid sample preparation being operable by the control unit (106),
- a liquid sample preparation module (306) having a mixing vessel (307),
- the bypass module (100) being connected to the control unit (106),
**characterized in that**
- the control unit (106) has a control program (122) and driver programs (124) for the operation of the modules of the liquid sample preparation means, the control program (122) accessing the driver programs (124) respectively assigned to one of the modules in order to control the procedure of the sample taking, the liquid sample preparation and the sample analysis, and
- a user interface (132) for inputting an analysis sequence to a computer (130), the user interface (132) being designed in such a way that a program procedure of the control program is determined by selecting representations of the modules and inputting the actions to be carried out by the selected modules to the computer (130), and the computer comprising means for exporting data (134) describing the analysis sequence for the control program,
- the data (134) describing the analysis sequence serving as a parameterization for the control program, so that the latter addresses the respectively required driver programs in the necessary order.

2. Analysis system according to Claim 1, the means for analysing the sample comprising a chromatograph, a combination of a chromatograph and a mass-spectrometry detector (GC-MS or HPLC-MS) or another type of analyser.

3. Method for controlling a process in an analysis system which has liquid sample preparation means, operable for automatic liquid sample preparation, organized in different modules (M1, M2, M3,...), each of the modules realizing a particular functionality, a liquid sample preparation module (306) comprising a mixing vessel (307), and individual liquid sample preparation modules being operated by a control unit (106) with a control program by virtue of the control program addressing driver programs (124) respectively assigned to one of the modules, and said addressing being performed in accordance with a parameterization predefined by a user, having the following steps:
- inputting of an analysis sequence on a computer (130) by a user by way of a user interface, the user interface (132) being designed such that a program procedure of the control program is determined by selecting representations of the modules of the liquid sample preparation means, and inputting actions to be carried out by the selected modules, on the computer (130),
- exporting data (134) describing the analysis sequence into the control program, the data (134) describing the analysis sequence serving as a parameterization for the control program, so that the latter addresses the respectively required driver programs in the necessary order,
- taking a sample from the process by operation of a bypass module (100) for taking a liquid sample from the process, which module is coupled to a device for automatic liquid sample preparation,
- delivering the sample from the sample taking unit to the device for automatic liquid sample preparation, into the mixing vessel (307) of the sample preparation module (306),
- operation of the device for automatic liquid sample preparation with the control program,
- automatically carrying out the liquid sample preparation,
- delivering the prepared sample to an analysis unit,
- operation of the analysis unit for analysing the prepared sample,
- outputting an analysis result to a bus system of a process control system for adjustment of the process on the basis of the analysis result by way of the process control system.

4. Method according to Claim 3, modules and actions to be carried out by the modules being selected by a user via a user interface of the computer in a tabular form, and the user's selection being exported in the form of parameters for transmission to the control unit.

5. Computer program product, in particular digital storage medium, for carrying out the method according to either of Claims 3 and 4 in an analysis system according to either of Claims 1 and 2.

## Revendications

1. Système d'analyse destiné à un processus, comportant :
- un module de dérivation pouvant être commandé (100) destiné à prélever un échantillon liquide à partir d'un processus, relié à
- des moyens pouvant être commandés (108 ; 302, 304, 306, 307, 308, 310, 312, 314, 316, 317, 318) destinés à préparer des échantillons liquides, reliés à
- des moyens pouvant être commandés (112) destinés à analyser l'échantillon, reliés à
- des moyens (116) destinés à transmettre un résultat d'analyse (114) à un système de conduite de processus (118, 120),
- une unité de commande (106), et
dans lequel
- les moyens pouvant être commandés destinés à préparer des échantillons liquides sont organisés en différents modules (M1, M2, M3, ...), dans lequel une fonctionnalité déterminée est réalisée par chacun des modules, et dans lequel des modules individuels de préparation d'échantillons liquides peuvent être commandés par l'unité de commande (106),
- un module de préparation d'échantillons liquides (306) comporte un récipient d'agitation (307),
- le module de dérivation (100) est relié à l'unité de commande (106),
**caractérisé en ce que**
- l'unité de commande (106) comporte un programme de commande (122) et un programme pilote (124) destinés à commander les modules des moyens de préparation d'échantillons liquides, dans lequel le programme de commande (122) accède aux programmes pilotes (124) pour commander le déroulement du prélèvement d'échantillons, la préparation d'échantillons liquides et l'analyse des échantillons, lesquels programmes pilotes sont respectivement associés à l'un des modules, et
- une interface utilisateur (132) permettant de saisir une séquence d'analyse sur un ordinateur (130), dans lequel l'interface utilisateur (132) est conçue de manière à ce qu'un déroulement de programme du programme de commande soit déterminé par sélection de représentations des modules et par saisie d'actions devant être exécutées par les modules sélectionnés sur l'ordinateur (130), et l'ordinateur comporte des moyens destinés à exporter des données (134) décrivant la séquence d'analyse pour le programme de commande,
- dans lequel les données (134) décrivant la séquence d'analyse sont utilisées pour le programme de commande de manière à ce que celui-ci réponde aux programmes pilotes nécessaires respectifs dans l'ordre voulu.

2. Système d'analyse selon la revendication 1, dans lequel les moyens d'analyse des échantillons comportent un chromatographe, une combinaison d'un chromatographe et d'un détecteur de spectrométrie de masse (GC-MS ou HPLC-MS) ou un autre analyseur.

3. Procédé de régulation d'un processus dans un système d'analyse qui comprend des moyens de préparation d'échantillons liquides pouvant être commandés automatiquement pour la préparation d'échantillons liquides organisés en différents modules (M1, M2, M3, ...), dans lequel chacun des modules réalise une fonctionnalité déterminée, dans lequel un module de préparation d'échantillons liquides (306) comprend un récipient d'agitation (307) et dans lequel des modules individuels de préparation d'échantillons liquides sont commandés par une unité de commande (106) au moyen d'un programme de commande en faisant en sorte que le programme de commande accède à des programmes pilotes (124) qui sont respectivement associés à l'un des modules et que ledit accès soit effectué d'une manière qui correspond à un paramétrage prédéterminé par un utilisateur,
comportant les étapes suivantes :
- saisie par un utilisateur d'une séquence d'analyse sur un ordinateur (130) par l'intermédiaire d'une interface utilisateur, dans lequel l'interface utilisateur (132) est conçue de manière à ce qu'un déroulement de programme du programme de commande soit déterminé par sélection de représentations des modules des moyens de préparation d'échantillons liquides et par saisie des actions devant être exécutées par les modules sélectionnés sur l'ordinateur (130),
- exportation des données (134) décrivant la séquence d'analyse dans le programme de commande, dans lequel les données (134) décrivant la séquence d'analyse sont utilisées en tant que paramétrage du programme de commande de manière à ce que celui-ci commande les programmes pilotes respectifs nécessaires dans l'ordre voulu,
- prélèvement d'un échantillon à partir du processus par commande d'un module de dérivation (100) permettant de prélever un échantillon liquide dans le processus, lequel module de dérivation est couplé à un dispositif de préparation automatique d'échantillons liquides,
- acheminement de l'échantillon de l'unité de prélèvement d'échantillons au dispositif de préparation automatique d'échantillons liquides, dans le récipient d'agitation (307) du module de préparation d'échantillons (306),
- commande du dispositif de préparation automatique d'échantillons liquides au moyen du programme de commande,
- exécution automatique de la préparation automatique d'échantillons liquides,
- acheminement de l'échantillon préparé vers une unité d'analyse,
- commande de l'unité d'analyse afin d'analyser l'échantillon préparé,
- fourniture d'un résultat d'analyse sur un système de bus d'un système de conduite de processus pour effectuer une post-régulation du processus sur la base du résultat d'analyse au moyen du système de conduite de processus.

4. Procédé selon la revendication 3, dans lequel des modules et des actions devant être effectuées par les modules sont sélectionnés sous la forme de tableaux par un utilisateur par l'intermédiaire d'une interface utilisateur de l'ordinateur et la sélection effectuée par l'utilisateur est exportée sous la forme de paramètres destinés à être transmis à l'unité de commande.

5. Produit de programme informatique, notamment support de mémoire numérique, destiné à mettre en oeuvre le procédé selon l'une quelconque des revendications 3 ou 4 dans un système d'analyse selon l'une quelconque des revendications 1 ou 2.
